# FASCICULE DE BREVET EUROPEEN

(11) **EP 0 686 492 B1**
(45) Date de publication et mention de la délivrance du brevet: **12.04.2000**
(21) Numéro de dépôt: 95107579.5
(22) Date de dépôt: 18.05.1995
(51) Int. Cl.: B29D 30/06

(54) **Vulcanisation de pneus: apport de calories par l'intérieur**
Reifenvulkanisierung durch Wärmezufuhr von innen
Tyre vulcanisation by supplying heat from the inside

(30) Priorité: 09.06.1994 FR 9407165
(43) Date de publication de la demande: 13.12.1995
(73) Titulaire: SEDEPRO, F-75015 Paris (FR)
(72) Inventeur: Laurent, Daniel, F-38240 Meylan (FR)
(74) Mandataire: Bauvir, Jacques

(56) Documents cités:
- EP-A- 0 061 850
- EP-A- 0 246 495
- EP-A- 0 467 314
- GB-A- 2 091 173
- PATENT ABSTRACTS OF JAPAN vol. 8 no. 238 (M-335) ,31 Octobre 1984 & JP-A-59 115827 (TATEISHI TAKETOSHI ET AL.) 4 Juillet 1984,

## Description

La présente invention concerne la vulcanisation des pneus. Plus précisément, elle se rapporte aux moyens utilisés pour apporter des calories par l'intérieur du pneumatique.

On connaît diverses machines et procédés permettant d'effectuer la vulcanisation des pneumatiques. Les presses individuelles constituent une première catégorie de machines, dans lesquelles le pneumatique reste chargé pendant toute la période de temps pendant laquelle il est nécessaire de lui communiquer des calories. Ce type de presse assure la cinématique du moule nécessaire pour l'introduction d'une ébauche crue et pour le déchargement d'un pneu vulcanisé. Pendant tout le cycle de production, le moule utilisé reste monté dans la presse.

Les systèmes dans lesquels plusieurs moules défilent successivement devant une emboîteuse assurant le chargement et/ou le déchargement constituent une autre catégorie de machines de cuisson. Le brevet US 4 728 274 en donne un exemple, que l'on désignera dans la suite par presse "collective" ou installation ou système "collectif".

Dans tous les cas, il est nécessaire d'apporter à l'ébauche des calories aussi bien par l'extérieur que par l'intérieur, et de soumettre l'ébauche à une pression de moulage donnée pendant le déroulement de la réaction de vulcanisation. L'invention concerne l'apport de calories par l'intérieur. Plus particulièrement, elle concerne ceux des systèmes de vulcanisation qui utilisent un fluide caloporteur pour à la fois transmettre les calories nécessaires à la réaction de vulcanisation et imprimer la pression de moulage par l'intérieur de l'ébauche, celle-ci étant retenue à l'extérieur par un moule définissant la surface extérieure des flancs et de la bande de roulement du pneu.

Dans les installations collectives, le moule de cuisson quitte l'emboîteuse et reste en attente pendant une période donnée pour laisser se développer la réaction de vulcanisation. On introduit, en général à l'emboîteuse, une charge pré-calculée de fluide caloporteur, puis on déconnecte la source de fluide. Il convient d'établir une liaison avec la réserve de fluide caloporteur qui soit facilement démontable lorsqu'une ébauche venant d'être introduite dans un moule quitte l'emboîteuse. Il est préférable d'avoir une installation embarquée (c'est à dire se déplaçant avec le moule), capable d'assurer le brassage et la régulation en température du fluide caloporteur.

L'encombrement des dispositifs utilisés jusqu'à présent pour assurer le moulage et l'apport de calories par l'intérieur du pneu pose un problème encore mal résolu dans l'état actuel de la technique. Ce problème est tout particulièrement aigu dans la seconde catégorie de machines, au point de la rendre peu intéressante alors que pourtant elle présente l'avantage de mieux utiliser la mécanique d'animation des moules.

L'invention apporte une solution à ce problème en proposant un système de très grande compacité qui, en permettant de concentrer plus à l'intérieur de l'espace disponible entre les bourrelets d'un pneu les moyens nécessaires pour chauffer et brasser le fluide caloporteur, laisse une plus grande liberté de conception des presses de vulcanisation, ou des emboîteuses utilisées pour fermer et/ou ouvrir les moules de vulcanisation.

L'invention propose une unité de chauffage et de brassage d'une charge d'un fluide caloporteur sous pression, utilisée pour la cuisson de pneus, comportant une turbine actionnée par un moteur électrique, ladite turbine et ledit moteur électrique, aussi bien le rotor que le stator de celui-ci, étant enfermés dans une enceinte étanche contenant ledit fluide, de sorte qu'il n'y a pas d'arbre en mouvement rotatif traversant la paroi de l'enceinte pour assurer l'entraînement de ladite turbine.

Sous un autre aspect, l'invention propose un procédé de vulcanisation d'un pneu dans lequel l'apport de calories par l'intérieur du pneumatique est effectué en faisant circuler un fluide caloporteur dans la cavité interne du pneu au moyen d'une turbine entraînée par un moteur électrique baignant en totalité dans ledit fluide caloporteur, et en réchauffant au moins en partie ledit fluide caloporteur grâce aux pertes par échauffement dudit moteur électrique. De la sorte, le rendement énergétique global de la vulcanisation s'en trouve amélioré.

Les figures suivantes illustrent un exemple de réalisation de l'invention permettant d'en bien comprendre le fonctionnement et d'en saisir tous les avantages.
La figure 1 illustre l'unité selon l'invention pendant la vulcanisation;
La figure 2 illustre l'unité selon l'invention dans une configuration qu'elle peut prendre en dehors des périodes de vulcanisation.

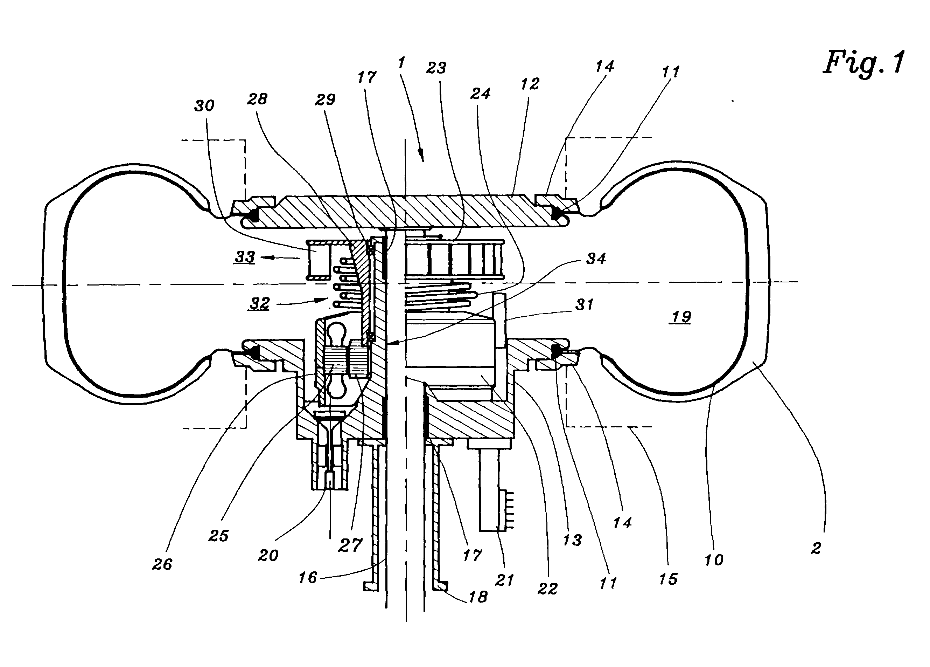

A la figure 1, on voit une unité 1 selon l'invention, telle qu'elle se présente pendant une opération de vulcanisation d'un pneu 2. Pour illustrer l'invention, on décrit une application de celle-ci à un procédé utilisant une membrane 10 pour contenir ledit fluide caloporteur pendant la cuisson du pneu. De préférence, le fluide caloporteur est un gaz neutre, comme par exemple de l'azote.

La membrane 10 de vulcanisation est pourvue de deux talons 11. Ceux-ci sont ancrés sur deux plateaux 12 et 13 grâce à deux flasques 14. Les traits interrompus 15 symbolisent un moule tel qu'utilisé tout à fait couramment pour mouler la surface apparente extérieure d'un pneu.

Le plateau 13 comporte un perçage en son centre, à l'intérieur duquel est montée à coulissement libre une tige 16 fixée par ailleurs au plateau 12. Deux joints 17 assurent l'étanchéité entre la tige 16 et le plateau 13. Les deux plateaux 12 et 13 forment, avec la membrane 10, une enceinte étanche 19 pouvant contenir un fluide caloporteur.

Le plateau 13 comporte un clapet auto-obturant 20 permettant l'introduction ou l'extraction du fluide caloporteur dans et hors de l'enceinte 19 et permettant de maintenir isolée dans ladite enceinte 19 une quantité donnée de fluide caloporteur, ainsi que la mise sous pression de ce fluide. Enfin, le plateau 13 comporte aussi un connecteur électrique hermétique 21 permettant l'alimentation de l'appareillage électrique disposé dans l'enceinte 19. Un fourreau 18 assure la protection de la tige 16, tout en permettant le montage du plateau 13 sur le bâti de la machine et/ou la solidarisation avec le moule 15. Notons encore que celui-ci est conçu et/ou monté dans la machine de façon à résister à la pression interne prévalant dans l'enceinte 19 pendant la vulcanisation.

Dans sa partie centrale, la figure 1 comporte une demi coupe (moitié de gauche) et une demi vue (moitié de droite) montrant un moteur électrique 22 et une turbine 23. Un moyen de chauffage du fluide caloporteur est également disposé à l'intérieur même de ladite enceinte 19, sur le chemin de circulation dudit fluide : c'est ici une résistance électrique 24. Le stator 25 du moteur 22 est monté sur une carcasse 26 elle-même fixé sur le plateau 13. Le rotor 27 du moteur 22 est monté sur un tube 28, lui-même monté sur des roulements 29 calés sur un arbre creux 34 formant une seule pièce avec le plateau 13. Le tube 28 supporte et entraîne la turbine 23, constituée par des aubes 30.

La rotation de la turbine 23 provoque une circulation du fluide caloporteur dans le sens indiqué par les flèches 32 et 33. Le fluide aspiré dans le sens indiqué par la flèche 32 rejoint la partie centrale de l'unité 1 où il passe sur la résistance électrique 24, dont les spires sensiblement concentriques au tube 28 sont quelque peu décalées les unes par rapport aux autres afin d'être bien léchées sur tout leur pourtour par le courant de fluide caloporteur, de façon à favoriser l'échange thermique. Après un bref trajet dans la zone de chauffage autour des spires de la résistance électrique 24, le fluide caloporteur est refoulé radialement par la turbine 23, dans le sens indiqué par la flèche 33.

Le courant de fluide embrasse également toute la carcasse 26 du moteur 22, de façon à en limiter l'échauffement. Tous les constituants concernés, notamment le moteur 22 et les roulements 29 sont bien entendu conçus pour fonctionner normalement aux températures habituelles pour la vulcanisation des pneumatiques, à savoir des températures de l'ordre de 150°C à 180°C.

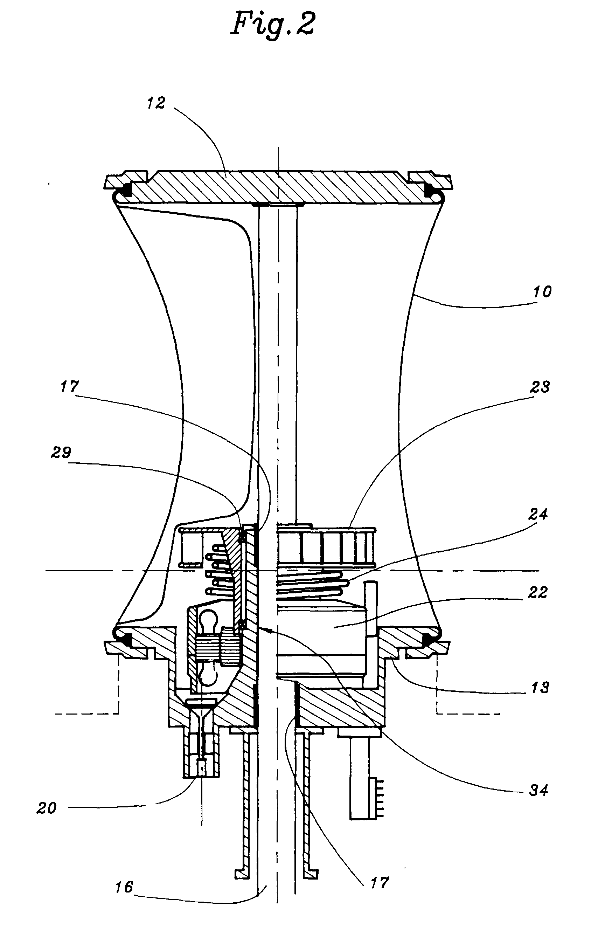

On sait que, afin de pouvoir monter une ébauche crue sur un mécanisme de vulcanisation à membrane, ou afin de pouvoir séparer un pneu vulcanisé de ladite membrane, il faut pouvoir déployer ladite membrane dans la cavité interne du pneu, et il faut pouvoir la replier jusqu'à ce qu'elle soit contenue dans l'espace situé radialement à l'intérieur des bourrelets. Le déploiement ainsi que le repli de la membrane sont grandement facilités si la machine utilisée comprend des moyens assurant un mouvement d'éloignement et de rapprochement relatif des plateaux 12 et 13 supportant la membrane 10 (voir figure 2).

De préférence, l'étanchéité entre les plateaux 12 et 13 mobiles est préservée pendant le mouvement relatif entre plateaux 12 et 13. C'est la raison pour laquelle l'unité 1 est équipée de joints 17. Il est alors possible de mettre l'enceinte 19 en dépression tout en écartant les plateaux 12 et 13 pour favoriser le repli de la membrane 10.

Il est préférable d'assurer la commande du mouvement relatif des deux plateaux 12 et 13 par des organes mécaniques en prise sur ceux-ci, débouchant d'un seul côté de l'unité 1, pour ne pas entraver le passage du pneu de l'autre côté de l'unité 1. Grâce à l'arbre creux 34 laissant libre passage d'un côté à l'autre de ladite unité 1, le centre de celle-ci (c'est à dire la zone centrale incluant l'axe de rotation de ladite turbine) comporte un volume disponible pour des organes quelconques. Ce passage est ici mis à profit pour monter la tige 16 reliant le plateau supérieur 12 aux organes de commande situés du côté inférieur de l'unité 1.

Grâce à l'invention, il n'y a pas d'étanchéité à prévoir entre le moteur 22 et la turbine 23. La suppression d'un joint d'étanchéité est toujours avantageuse. Dans la réalisation particulière décrite ici, la turbine 23 et l'arbre creux 34 étant tous deux à l'intérieur de l'enceinte 19, la commande en rotation de la turbine 23 ne nécessite pas de réaliser un joint tournant sur un arbre de grand diamètre, à savoir celui correspondant sensiblement au diamètre des roulements 29.

Notons que la tige 16 ne tourne pas par rapport au plateau 13. L'implantation d'une étanchéité (joints 17) entre pièces en glissement axial pur, sans rotation relative, ne pose aucun problème d'efficacité ou de fiabilité, contrairement aux étanchéités entre pièces tournantes, sur grands diamètres, soumises à des vitesses linéaires relatives élevées.

En outre, la traversée de plateau pour le fluide caloporteur est unique et est constituée par le clapet auto-obturant 20. Il n'y a pas de pompe, de tuyau ou de moteur déporté à l'extérieur de l'enceinte 19, ce qui nécessiterait au moins une autre traversée de l'un des plateaux 12 et 13 pour le fluide caloporteur. Cela simplifie considérablement la conception de la presse supportant le moule, ou du support maintenant le moule après fermeture de celui-ci.

Outre une plus grande simplification mécanique, l'invention permet aussi d'exploiter un procédé de vulcanisation permettant de récupérer les pertes thermiques du moteur 22 actionnant la turbine 23. De préférence, on utilise une résistance électrique 24 baignant dans ledit fluide caloporteur et on régule la température dudit fluide de vulcanisation en agissant sur le flux thermique dissipé par ladite résistance 24.

Dans le cas où l'on isole l'enceinte 19 pendant l'opération de cuisson proprement dite, on calcule la charge de fluide caloporteur de telle façon que l'on obtienne une pression convenable à la température de consigne.

La présente invention apporte une solution ayant de nombreux avantages tant du point de vue mécanique que du point de vue du bilan énergétique. Elle peut être utilisée dans de nombreux types de machines différents, que ce soit en presses de cuisson individuelles ou en installation collectives, que ce soit en cuisson avec ou sans membrane.

L'invention permet de construire un dispositif de brassage du fluide de vulcanisation totalement intégré au centre d'un moule, situé entièrement à l'intérieur d'un cylindre imaginaire passant à l'intérieur des bourrelets (sauf bien entendu la membrane lorsqu'elle est déployée) et quasi totalement à l'intérieur des plans perpendiculaires à l'axe de rotation tangents aux flancs du pneu vulcanisé. Elle peut aussi être mise à profit pour construire un circulateur déporté hors du centre d'un moule.

## Revendications

1. Unité de chauffage et de brassage d'une charge d'un fluide caloporteur sous pression, utilisée pour la cuisson de pneus, comportant une turbine (23) actionnée par un moteur électrique (22), ladite turbine et ledit moteur électrique, aussi bien le rotor que le stator de celui-ci, étant enfermés dans une enceinte étanche (19) contenant ledit fluide.

2. Unité selon la revendication 1, dans laquelle un moyen de chauffage dudit fluide est disposé à l'intérieur même de ladite enceinte, sur le chemin de circulation dudit fluide.

3. Unité selon la revendication 1 ou 2, comprenant une membrane (10) de vulcanisation comportant deux talons (11) d'ancrage, dans laquelle ladite enceinte comporte un premier et un second plateaux (12 et 13) sur lesquels les talons (11) d'ancrage sont montés, et comprenant des moyens assurant un mouvement d'éloignement ou de rapprochement relatif desdits plateaux, l'étanchéité entre plateaux mobiles étant préservée pendant le mouvement relatif entre les plateaux.

4. Unité selon l'une des revendications 1 à 3, comportant un passage libre occupant la zone centrale incluant l'axe de rotation de ladite turbine, s'étendant axialement au travers de ladite unité, ledit passage permettant l'implantation d'organes d'un côté à l'autre de ladite unité.

5. Unité selon l'une des revendications 3 ou 4, dans laquelle l'un desdits plateaux (13) comporte un seul clapet auto-obturant (20) permettant l'introduction ou la vidange dudit fluide et permettant de maintenir isolée dans ladite enceinte (19) une quantité donnée de fluide caloporteur.

6. Unité selon l'une des revendications 3 à 5, dans laquelle ladite membrane est ancrée directement sur lesdits plateaux(12 et 13).

7. Procédé de vulcanisation d'un pneu dans lequel l'apport de calories par l'intérieur du pneumatique est effectué en faisant circuler un fluide caloporteur dans la cavité interne du pneu au moyen d'une turbine entraînée par un moteur électrique baignant en totalité dans ledit fluide caloporteur, à savoir aussi bien le rotor que le stator dudit moteur électrique, et en réchauffant au moins en partie ledit fluide caloporteur grâce aux pertes par échauffement dudit moteur électrique.

8. Procédé selon la revendication 7, dans lequel on utilise une résistance électrique baignant dans ledit fluide caloporteur et on régule la température dudit fluide de vulcanisation en agissant sur le flux thermique dissipé par ladite résistance.

9. Procédé selon l'une des revendications 7 ou 8, utilisant une membrane montée sur des plateaux pour contenir ledit fluide caloporteur pendant la cuisson du pneu.

10. Procédé selon la revendication 9, dans lequel lesdits plateaux sont mobiles l'un par rapport à l'autre, la membrane et lesdits plateaux définissant une enceinte étanche quelle que soit la position relative des plateaux.

## Patentansprüche

1. Heiz- und Umwälzeinrichtung für eine Menge an unter Druck stehendem, wärmeförderndem Strömungsmittel, die zum Vulkanisieren von Luftreifen verwendet wird, mit einer Turbine (23), die durch einen Elektromotor (22) betrieben wird, wobei die genannte Turbine und der genannte Elektromotor sowie dessen Läufer und Stator in eine dichte Umhüllung (19) eingeschlossen sind, die das genannte Strömungsmittel enthält.

2. Einheit nach Anspruch 1, in der Beheizungsmittel für das genannte Strömungsmittel selbst im Inneren der genannten Umhüllung und auf dem Umlaufweg des genannten Strömungsmittels angeordnet sind.

3. Einheit nach Anspruch 1 oder 2, mit einer Vulkanisiermembran (10), die zwei Verankerungsansätze (11) aufweist, worin die genannte Umhüllung eine erste und eine zweite Platte (12 und 13) aufweist, auf denen die Verankerungsansätze (11) angebracht sind, und mit Mitteln, die eine relative Auseinander- oder Annäherungsbewegung der genannten Platten sicherstellen, wobei die Abdichtung zwischen den beweglichen Platten während der gegenseitigen Relativbewegung der Platten aufrechterhalten bleibt.

4. Einheit nach einem der Ansprüche 1 bis 3, mit einem freien Durchgang, der die Mittelzone einnimmt, die die Drehachse der genannten Turbine mit einschließt und sich axial quer durch die genannte Einheit erstreckt, wobei der genannte Durchgang das Einsetzen von Organen von der einen Seite der genannten Einheit zur anderen gestattet.

5. Einheit nach einem der Ansprüche 3 oder 4, worin eine der genannten Platten (13) ein einziges selbstschließendes Ventil (20) aufweist, das das Einleiten oder Entleeren des genannten Strömungsmittels gestattet und es erlaubt, in der genannten Umhüllung (19) eine vorgegebene Menge an wärmeförderndem Strömungsmittel isoliert zu halten.

6. Einheit nach einem der Ansprüche 3 bis 5, worin die genannte Membran unmittelbar auf den genannten Platten (12 und 13) verankert ist.

7. Verfahren zum Vulkanisieren eines Lufreifens, worin die Wärmezufuhr von innen her dadurch bewirkt wird, daß man ein wärmeförderendes Strömungsmittel im Innenhohlraum des Reifens mittels einer Turbine umlaufen läßt, die von einem Elektromotor angetrieben ist, der in seiner Gesamtheit in das wärmefördernde Strömungsmittel eintaucht, und zwar ebenso der Läufer wie der Stator des genannten Elektromotors, und daß man das genannte wärmefördernde Strömungsmittel mindestens teilweise mit den Erwärmungsverlusten des genannten Elektromotors warmhält.

8. Verfahren nach Anspruch 7, worin man einen elektrischen Widerstand benutzt, der in das genannte wärmefördernde Strömungsmittel eintaucht, und man die Temperatur des genannten Vulkanisier-Strömungsmittels dadurch einreguliert, daß man auf den Wärmefluß einwirkt, der vom genannten Widerstand abgegeben wird.

9. Verfahren nach einem der Ansprüche 7 oder 8, das eine Membran benutzt, die auf Platten angebracht ist, um das genannte wärmefördernde Strömungsmittel während des Vulkanisierens des Reifens aufzunehmen.

10. Verfahren nach Anspruch 9, worin die genannten Platten zueinander beweglich sind, und die Membran und die genannten Platten eine Umhüllung festlegen, die unabhängig von der Relativlage der Platten dicht ist.

## Claims

1. A unit for the heating and stirring of a charge of a heat-exchange fluid under pressure, used for the curing of tyres, comprising a turbine (23) driven by an electric motor (22), said turbine and said electric motor, both the rotor and the stator of the latter, being enclosed in a fluid-tight enclosure (19) containing said fluid.

2. A unit according to Claim 1, in which a means for heating said fluid is arranged in the inside of said enclosure itself on the path of flow of said fluid.

3. A unit according to Claim 1 or 2, comprising a vulcanisation bladder (10) having two anchoring beads (11), in which said enclosure comprises a first and a second plate (12 and 13) on which the anchoring beads (11) are mounted, and comprising means which ensure a relative movement of such plates away from and towards each other, the sealing means between the movable plates being preserved during the relative movement between the plates.

4. A unit according to one of Claims 1 to 3, comprising a free passage occupying the central zone including the axis of rotation of said turbine, extending axially through said unit, said passage permitting the implanting of parts from one side of said unit to the other.

5. A unit according to one of Claims 3 or 4, in which one of said plates (13) has a single automatically closing valve (20) which permits the introduction or emptying of said fluid and makes it possible to keep a given quantity of heat-exchange fluid isolated within said enclosure (19).

6. A unit according to one of Claims 3 to 5, in which said bladder is anchored directly on said plates (12 and 13).

7. A process for the vulcanising of a tyre in which the imparting of heat from the inside of the tyre is effected by causing a heat-exchange fluid to circulate in the inner cavity of the tyre by means of a turbine driven by an electric motor contained in its entirety within said heat-exchange fluid, namely both the rotor and the stator of said electric motor, and by reheating said heat-exchange fluid at least in part due to losses by heating of said electric motor.

8. A process according to Claim 7, in which use is made of an electric resistor contained within said heat-exchange fluid and the temperature of said vulcanisation fluid is regulated by acting on the heat flow dissipated by said resistor.

9. A process according to one of Claims 7 or 8, using a bladder mounted on plates in order to contain said heat-exchange fluid during the curing of the tyre.

10. A process according to Claim 9, in which said plates are movable with respect to each other, the bladder and said plates defining a fluid-tight enclosure whatever the relative position of the plates.
